# NEW EUROPEAN PATENT SPECIFICATION

(11) **EP 3 050 666 B2**
(45) Date of publication and mention of the opposition decision: **10.08.2022**
(45) Mention of the grant of the patent: 28.03.2018
(21) Application number: 15152735.5
(22) Date of filing: 27.01.2015
(51) Int. Cl.: B23K 26/14, B22F 3/105, B23K 26/20, B23K 26/34

(54) **Method of processing materials by applying a laser beam with adaptive shielding gas flow**
Verfahren zur Verarbeitung von Materialien unter Verwendung eines Laserstrahles mit adaptiver Schutzgasströmung
Procédé de traitement de matériaux en employant un faisceau laser et un débit de gaz protecteur adaptatif

(43) Date of publication of application: 03.08.2016
(73) Proprietor: Ansaldo Energia IP UK Limited, London W1G 9DQ (GB)
(72) Inventor: Meidani, Hossein, 8052 Zurich (CH); Roerig, Felix, 5400 Baden (CH); Etter, Thomas, 5037 Muhen (CH)
(74) Representative: Bernotti, Andrea

(56) References cited:
- WO-A2-2014/125280
- CN-A- 104 014 932
- DE-A1-102013 205 724
- JP-A- 2001 212 688
- JP-B2- 3 126 790
- JP-U- S62 151 091
- US-A- 4 642 445

## Description

### TECHNICAL FIELD OF INVENTION

The present disclosure relates to a method of processing materials according to the preamble of claim 1 (see, for example, JP 2001 212688).

### BACKGROUND OF INVENTION

Laser-based methods for processing materials are well known in the art. In methods such as, for instance, selective laser melting, also known as SLM or Direct Metal Laser Sintering (DMLS), or in laser welding, a high intensity laser beam is directed onto a material, in particular a metal, in order to melt the material. SLM is for instance used to manufacture solid components from metal powders. Due to the high laser power applied, the local temperature at the processing location may easily reach the vaporization point of metallic alloys. Fumes or vapors from the melting pool may significantly deteriorate the processing quality if the fumes or vapors interact with the laser beam and attenuate the laser beam. When the laser beam is attenuated, the local process temperature will drop, the fume or vapor formation will decline, the local process temperature will in turn rise, fostering again the production of fume and vapor, and so forth. As will be appreciated, an alternating incident laser power on the material and thus alternating local process temperature will result. In many of such processes the processing location, defined as the incident point of the laser beam on the material, will be advanced along a processing trajectory. It will become apparent that the local process temperature applied at a specific location along said trajectory will vary, which results in inhomogeneous material structures, and in turn in poor component or welding quality.

A further effect is that fumes or vapors might contaminate the process chamber if no adequate purging of the process chamber is performed. For instance, optical components might be soiled, and the laser beam may generally be scattered and attenuated inside the fume-filled process chamber.

For instance in selective laser melting machines, a flow of shielding gas is used to purge the fumes. The flow rate of the shielding gas is adjusted manually and based on an operator's judgment. Methods are known in the art which comprise controlling the shielding gas flow intensity depending on parameters such as e. g. filter degradation. Further, depending on the position of the processing location, the movement of the laser beam on the material, and the laser beam direction, the fumes may be blown in a direction where they will interact with the laser beam. This may for instance be the case if a shielding gas flow vector is directed against the direction of the incident laser beam, or is directed in the direction into which the laser beam is advanced on the material, or, in other words, along a processing advance vector.

The issue may be addressed in avoiding to carry out the process in regions of the process chamber where unfavorable geometric conditions are found, e.g. areas close to the shielding gas inlet, and selecting the processing trajectory and/or processing advance vector such as to avoid advancing the laser beam into the fume. However, this will turn a significant part of the process chamber unusable, and turn the production steps inflexible, which will rise the process time and consequently the process cost.

### SUMMARY OF THE INVENTION

It is an object of the present disclosure to provide a method for laser-based material processing. More specifically, one object of the present disclosure is to provide a method for laser-based material processing overcoming drawbacks of the art. It is a further object of the present disclosure to provide a method which will enhance the output of a production cycle and lower the processing cost. It is a further object of the present disclosure to enhance and maintain the process quality, or the quality of the products originating from the process, respectively.
Further, a machine for carrying out the process described herein is disclosed.
Further effects or benefits of the method and the machine described herein, whether explicitly mentioned or not, will become apparent in view of the description below. A method of material processing according to claim 1 is defined in claim 1. The method may in particular comprise a selective laser melting process. The method may also comprise a laser welding process or any other process in which a laser beam is used to melt a material.

The shielding gas flow may for instance be controlled in controlling the shielding gas flow intensity and/or the shielding gas flow vector, i.e. the direction into which the shielding gas flows. However, it will be appreciated that, in particular in applying a selective laser melting process, there are certain limitations as to the shielding gas flow intensity, such as to not blow away the metal powder.

In one aspect, an object of the method and apparatus disclosed herein is to provide a shielding gas flow which purges plumes of fume, vapor and sparks emanating from the process location in a way to avoid or minimize interaction with the laser beam. In other words, the shielding gas flow is controlled such that the fumes or other process by-products which might interact with the laser beam, or at least the biggest part thereof, are blown over already solidified material and will thus not influence the process during a processing cycle. The laser beam will not advance into the plume.

Controlling shall within this disclosure not be understood as a closed loop control, but may also mean adjustment dependent on certain parameters.

The shielding gas may for instance be argon, helium, nitrogen, or a combination thereof.

Generally, while this statement is in no way intended to be limiting, the laser beam will not only be applied to one processing location, but will be advanced along a trajectory on the material, such that the processing location position is advanced along said trajectory. The processing location position may in some embodiments, such as for instance in applying selective laser melting, typically advance at an advance speed of 100 mm/s to about 10000 mm/s, and may in particular be in a range from about 500 mm/s to 3000 mm/s, or from 500 mm/s to 2000 mm/s.

At each processing location position an advance vector defines the direction into which the processing location position will advance along the processing trajectory. In other words, an advance vector is related to each point on said trajectory. Mathematically spoken, the advance vector may be defined by the infinitesimal movement of the laser beam incidence position, or, in other word, the processing location position, from one point on said trajectory to next point on the trajectory. In a technical system, however, the trajectory may be defined by a finite number of points, and the advance vector may consequently be provided by a direction and speed with which a process control system will advance the process location. According to the present invention, the method comprises advancing the processing location position along a trajectory, wherein an advance vector is related to each position along said trajectory, and providing a shielding gas flow having a shielding gas flow vector. The advance vector and the shielding gas flow vector form an angle. The method according to the present invention comprises controlling the shielding gas flow vector such that the angle is larger than or equal to 45 degrees. In more specific modes of carrying out the method the shielding gas flow vector is chosen such that said angle is larger than or equal to 60 degrees, is larger than or equal to one of 75 degrees, 80 degrees or 85 degrees, is in particular larger than or equal to 90 degrees or larger than or equal to 120 degrees, and more particular is larger than or equal to 135 degrees. More generally speaking, the gas flow and the advance vector will not be in the same direction such that fumes will not interact with the advancing laser beam. The larger the angle is, the more reliably will any beam/fume interaction be avoided; on the other hand, allowing smaller angles will provide a higher process flexibility. As to the definition of angles within the present disclosure, always the smaller one of the two possible angles which may be measured between two vectors will be referred to.
It is understood that the process may comprise a multitude of independent trajectories, that is, for instance, the laser beam target point is subsequently moved to a multitude of processing cycle start points, and is moved along a trajectory from said start point. It is understood that preferably the laser beam will be switched off, will be attenuated, or will be deviated, such that no material melting is affected while the laser beam target point is advanced from one trajectory endpoint to a consecutive trajectory starting point. It is moreover understood that the laser beam needs not to be incident or incident at full power while the processing location moves along any given trajectory. It is noted that, during phases when the laser beam is attenuated, is switched off, is deviated, or is otherwise in a mode such that no material melting is effected, the trajectory as implied by optical component of a machine carrying out the process may be arbitrary. It is understood that during times when no material melting occurs the angles between an advance vector and a shielding gas flow vector is of no relevance. That is, during times when the laser beam is switched off, is deviated, or is otherwise in a mode such that no material melting is effected, the relationships between the advance vector and the shielding gas vector recited within this document need not to be met, while this would not deviate from the teaching of the present disclosure, as no fumes are generated. In another aspect it may be stated that the trajectory is defined as a direct connection between two consecutive points at which material is molten; any additional beam movement, whether actual or implied by optical components of the machine, when the laser beam is switched off, is deviated, or is otherwise in a mode such that no material melting is affected, is not considered as part of the processing trajectory as such additional movement does not contribute to the processing result.

A processing cycle, in the context of the present disclosure, may be understood as adding one layer of solidified material to one component to be manufactured by melting and subsequently solidifying a metal powder. That is, for instance, when multiple components are simultaneously manufactured by e.g. a selective laser melting process, a multitude of processing cycles is carried out for one layer of metal powder, each with an individual and independent processing trajectory and processing cycle start and end points. After all processing cycles in one layer of powder have been finalized, all components within the one build job are recoated simultaneously, that is, a new layer of metal powder is disposed, and new melting-resolidification cycles are initiated on the newly disposed powder.

A method according to the present disclosure may comprise choosing the trajectory such that the maximum angle included by any of the advance vectors related to any position on the trajectory with each other of the advance vectors related to any position on the trajectory is smaller than or equal to 270 degrees, in more specific embodiments is smaller than or equal to 210 degrees, and is in particular chosen such that all advance vectors are located in a first and a second quadrant, that is, the maximum angle included between any two advance vectors related to the trajectory is smaller than or equal to 180 degrees. In other words, all advance vectors related to any position of the trajectory are found in a semicircle. The method further comprises controlling the shielding gas flow vector such that an angle formed between an advance vector and the shielding gas flow vector is larger than or equal to 45 degrees. In more specific modes of carrying out the method, the shielding gas flow vector may be chosen such that said angle is larger than or equal to 60 degrees or 75 degrees, is larger than or equal to any value of 80, 85 or 90 degrees, and in particular is larger than or equal to 120 degrees or 135 degrees. While allowing a narrower range of angles may improve the process quality, choosing a larger range will provide more flexibility in carrying out the process.

In a further embodiment of the method according to the present disclosure the shielding gas flow vector is controlled such that an angle formed between each advance vector related to a specific trajectory and the shielding gas flow vector is larger than or equal to 45, and is in particular larger than or equal to 60 degrees or 75 degrees. The shielding gas flow vector may in particular be chosen such that an angle included between the shielding gas flow vector and each of said advance vectors is larger than or equal to 80 degrees or is larger than or equal to 85 degrees. In a more specific embodiment the shielding gas flow vector is located in one of a third and a fourth quadrant. In other words, while all advance vectors may be located in a semicircle, the shielding gas flow vector is located in a complementarity semicircle, and may in particular divide said complementary semicircle in two halves. In more specific modes of carrying out the method, the shielding gas flow vector is chosen such that said angle is larger than or equal to 90 degrees, in particular is larger than or equal to 120 degrees, and more in particular is larger than or equal to 135 degrees. This embodiment may be found particularly advantageous if the method further comprises determining all advance vectors applied during a processing cycle or while advancing along a processing trajectory, adjusting the shielding gas flow vector, and maintaining the shielding gas flow vector constant during the processing cycle or while advancing along the processing trajectory. Consequently, the shielding gas flow vector is not varied while the processing location is advanced along a processing trajectory, and it may be found desirable to have the conditions as to the angle formed between the shielding gas flow vector and the advance vector to be fulfilled at each position along the trajectory.

In still a further embodiment according to the present disclosure a mean advance vector may be defined for a processing cycle, and the shielding gas flow may be adjusted such that an angle included between the mean advance vector and the shielding gas flow vector is larger than or equal to 90 degrees, in particular is larger than or equal to 120 degrees, more particular is larger than or equal to 135 degrees, and in a specific embodiment is at least approximately equal to 180 degrees.

As a general statement it may be desirable to choose the shielding gas flow vector such as to be as much as possible opposite to a processing advance vector, such as to avoid as reliably as possible an advancement of the laser beam into a plume of fumes, sparks, and the like, which might be able to attenuate the laser beam.

In certain aspects of the disclosure the method may comprise at least one of a selective laser melting process and a laser welding process.

In particular for a selective laser melting process, a top layer surface of the selected laser melting process powder bed may provide a reference plane to the extent a reference plane has been referred to above.

In particular for a selective laser melting process, a processing cycle may be defined as advancing the processing location position along a processing trajectory, thus melting and subsequently solidifying a layer of metal powder and forming one material layer of a component. A consecutive processing cycle will be carried out after a new layer of metal powder has been deposited. For instance, when multiple components are simultaneously manufactured, a multitude of processing cycles is carried out for one layer of metal powder.

The method according to the present disclosure may further comprise at least one movable shielding gas inflow and/or outlet nozzle being provided, and controlling the shielding gas flow in moving at least one of the shielding gas inflow and/or outlet nozzles. In particular the shielding gas flow vector may be controlled in moving said nozzle along an arcuate trajectory and more in particular in moving said nozzle along a part-circular or circular trajectory.

In a further mode of carrying out the method according to the present disclosure, it may comprise providing at least one of a multitude of shielding gas inflow nozzles being oriented in various directions and/or a multitude of shielding gas outlet nozzles being oriented in various directions and controlling the shielding gas flow in selectively controlling the gas flow through nozzles being oriented in at least one selected direction. Controlling the flow may comprise selectively switching the gas flow through said nozzles on or off such that shielding gas selectively flows through defined specific nozzles, but may as well comprises selectively reducing or enhancing the flow through selected nozzles. That means, a multitude of nozzles is provided pointing in different directions. Shielding gas flow may be controlled in controlling the flow through selected ones of these nozzles. The shielding gas flow may thus be controlled without moving nozzles. As a benefit, it may be noted that control of the shielding gas flow may be effected faster, and no movable nozzles need to be provided. On the other hand, more nozzles may need to be provided.

The method may further comprise providing the shielding gas flow as a sheet of shielding gas, in particular in providing a shielding gas flow layer. In this respect the at least one nozzle may be shaped and arranged appropriately. For instance, the at least one shielding gas inflow nozzle may comprise a slot, or a multitude of slots which are arranged at least essentially in one plane, and/or it may comprise a multitude of holes arranged at least essentially in one plane with each other, and/or with inflow slots, such that a sheet of shielding gas emanates from the at least one nozzle. In particular, said sheet or layer of shielding gas may be parallel to a top surface of the powder bed in a selective laser melting process. Further, a movable shielding gas outlet may be provided, and controlling the shielding gas flow may comprise adjusting a position and/or direction of the shielding gas outlet.

It is understood that the various embodiments and features mentioned above may be combined with each other. It is further understood that effects and benefits not explicitly mentioned herein may be inherent in the method of the disclosure and may become readily apparent to the skilled person now or in the future.

### BRIEF DESCRIPTION OF THE DRAWINGS

The subject matter of the present disclosure is now to be explained more closely by means of exemplary embodiments and with reference to the attached drawings.
The figures of the drawings show
- Fig. 1: a schematic depiction of a selective laser melting process;
- Fig. 2: a schematic top view of a selective laser melting process with a processing trajectory;
- Fig. 3: an illustration of exemplary processing trajectories and shielding gas flows in two consecutive layers;
- Fig. 4: a schematic illustration of a further mode of carrying out a method according to the present disclosure;
- Fig. 5: an illustration of the directional relationships underlying the disclosed method;
- Fig. 6: an exemplary embodiment of a processing trajectory and angular ranges in which the shielding gas flow vector may be located.

The illustrations are schematic, and elements not required for understanding have been omitted for the ease of understanding and depiction.

### DETAILED DESCRIPTION OF DIFFERENT EMBODIMENTS OF THE INVENTION

The method according to the present disclosure shall now be lined out in more detail by means of exemplary embodiments in the context of a selective laser melting process. It is understood that the choice of this exemplary process is not intended to be limiting, and that any features shown or described in the exemplary embodiments are intended for illustrative purposes.

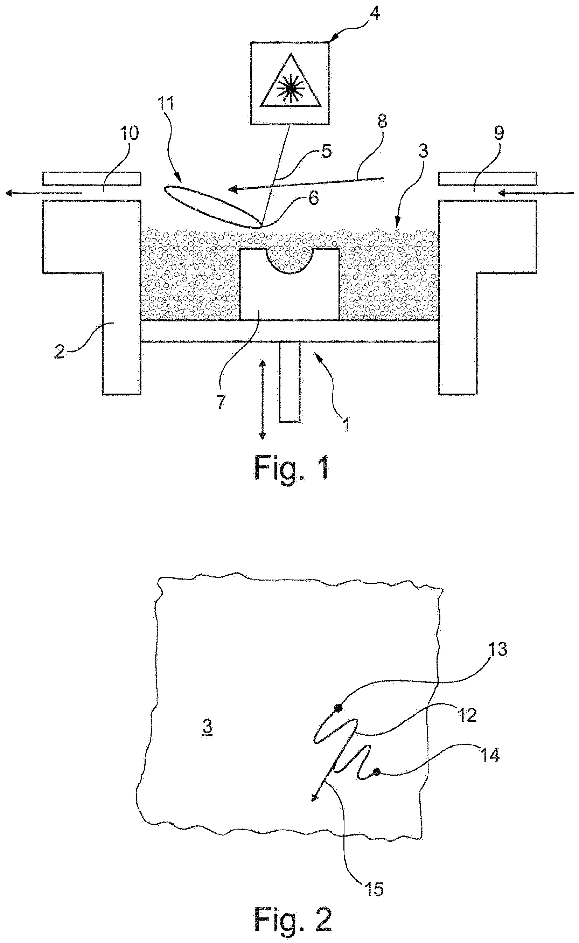

Figure 1 shows a schematic view of a selective laser melting process and apparatus. A building platform 1 is arranged in a casing 2. The building platform is adjustable in a vertical direction. A metal powder 3 is brought onto the building platform layer by layer, forming a metal powder bed. A laser system 4, for instance comprising a laser of sufficient power and an optical system for deviating and guiding the beam, is used to direct a laser beam 5 onto a top layer of the metal powder. The laser power is chosen sufficiently high to melt the metal powder. Preferably the laser power is sufficient to melt the metal powder at the processing location 6, located at the point of incidence of the laser beam on the top surface of the bed of metal powder, within fractions of seconds. The laser beam 5, and consequently the processing location 6, is advanced along the top surface of the bed of metal powder along a predefined trajectory. The metal powder is molten, and subsequently solidified, along said trajectory, forming a solid element. After said processing cycle has finished, a new layer of metal powder is disposed on top of the bed of metal powder, and a new processing cycle is initiated. Thus, layer by layer, a solid component 7 is formed. A shielding gas flow 8 is provided in introducing a shielding gas, such as for instance argon or nitrogen, through at least one shielding gas inflow nozzle 9, and extracting said shielding gas at the shielding gas outlet 10. Due to the high laser power, a plume 11 of fume and/or vapor emanates from the processing location 6 and is purged by the shielding gas flow 8. It will be appreciated that, if said plume interacts with the laser beam, the laser beam will be attenuated, and less laser power will reach the processing location 6. As has been described above, this may lead to an inhomogeneous and consequently poor material quality of solid component 7.

Multiple solid components may be manufactured in parallel in one bed of metal powder. The process may then comprise a multitude of independent trajectories, that is, for instance, the laser beam target point is subsequently moved to a multitude of processing cycle start points, and is moved along a trajectory from said start point. Each start point and each trajectory may be related to one component to be manufactured. However, it may be the case that manufacturing a component may at certain positions also require processing along multiple processing trajectories. It is understood, that preferably the laser beam will be switched off, will be attenuated, or will be deviated, such that no material melting is effected, while the laser beam target point is advanced from one trajectory endpoint to a consecutive trajectory starting point.
It is moreover understood that the laser beam needs not to be incident or incident at full power while the processing location is advances along a trajectory, but may be temporarily switched off, deviated, or be attenuated.

Figure 2 schematically depicts the process in a top view of metal powder bed 3. The processing location is advanced along processing trajectory 12 from a starting point 13 to an end point 14. At each location of trajectory 12 a related advance vector 15 exists, defining the direction into which the incident point of the laser beam performs a movement from one point of the trajectory to a consecutive point of the trajectory.

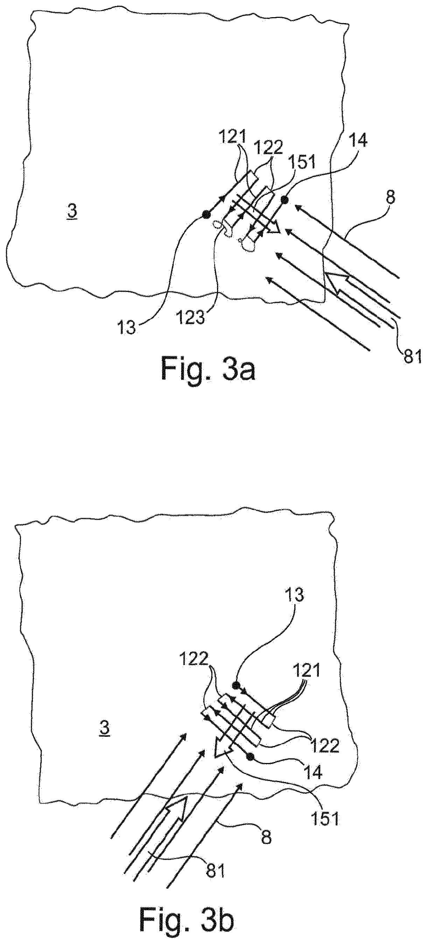

With reference to figure 3, an exemplary mode of carrying out processing cycles in consecutive layers of the metal powder bed 3 is illustrated. In figure 3 a), the incident point of a laser beam is placed onto a layer of metal powder and advanced over the top surface of said layer from a start point 13 to an end point 14 along a processing trajectory. The processing trajectory is made up of scanning lines 121 and transition trajectories 122. The processing location advances from the trajectory start point 13 to the trajectory end point 14 as indicated by arrows on the trajectory. During the processing cycle, the laser beam is controlled such that melting only occurs while advancing the processing location along the multitude of parallel or at least approximately parallel scanning lines 121. The scanning lines may be equidistant. While transferring the processing location from one scanning line to a subsequent scanning line, the laser beam is switched off, attenuated, deviated or otherwise controlled such that no melting of material occurs. In fact, the movement of the laser beam which might be implied by the movement of optical components of the machine, might follow arbitrary implied beam movement lines 123. However, as no melting occurs during this implied movement, this is not relevant to the subject matter of the present disclosure. The processing trajectory is understood as a connection between two subsequent points where melting takes place. Thus, the processing trajectory in the sense of the present disclosure is defined by scanning lines 121 and the transition trajectories 122. For the processing cycle depicted in figure 3 a) a mean advance vector 151 may be defined which is essentially the vector along which the scanning lines 121 are staggered. After said processing cycle, a new layer of metal powder is disposed. As depicted in figure 3 b), the trajectory for the processing cycle in said consecutive layer is chosen such that the processing trajectories of two consecutive processing cycles cross each other. In particular, the scanning lines 121 in the consecutive layer processing cycle are chosen such as to cross the scanning lines of the previous processing cycle, which is depicted in figure 3 a). In particular, they are chosen such as to cross each other at least approximately at a right angle. Thus, also the mean advance vectors 151 in consecutive layers cross each other, and in particular cross each other at least approximately at a right angle. Thus, the emergence of lamellar structures in the solid component is avoided. Furthermore shown is the shielding gas flow 8 with a shielding gas flow vector 81. As is seen, the direction of the shielding gas flow is varied from one layer to a consecutive layer. Generally spoken, the shielding gas flow vector is oriented to comprise a vector component from the trajectory end point 14 towards the trajectory start point 13, and is chosen such that a counterflow or at least a flow perpendicular to all advance vectors along the trajectory is maintained In particular, in the example provided, the shielding gas flow vector 81 is directed against the mean advance vector for each layer. As a result, the plume is always blown away from a consecutive processing location on the trajectory.

It is noted, that in this example the shielding gas vector is maintained constant during a processing cycle. It is appreciated, that ideally the shielding gas flow vector would follow the local advance vector on the trajectory to always provide a counterflow. However, due to the high advance speed along the trajectory, this may be hard to achieve, if technically feasible at all. Thus, in this method, a layer of metal powder is disposed, the trajectory for the processing cycle is determined, and the shielding gas flow direction is adjusted such as to always form an appropriate angle with each advance direction along said trajectory, and is only adjusted while depositing a consecutive layer of metal powder into an appropriate direction for a consecutive processing cycle. However, controlling and varying the shielding gas flow vector during a processing cycle, or while the processing location is advanced along a processing trajectory, is well within the scope of the present disclosure.

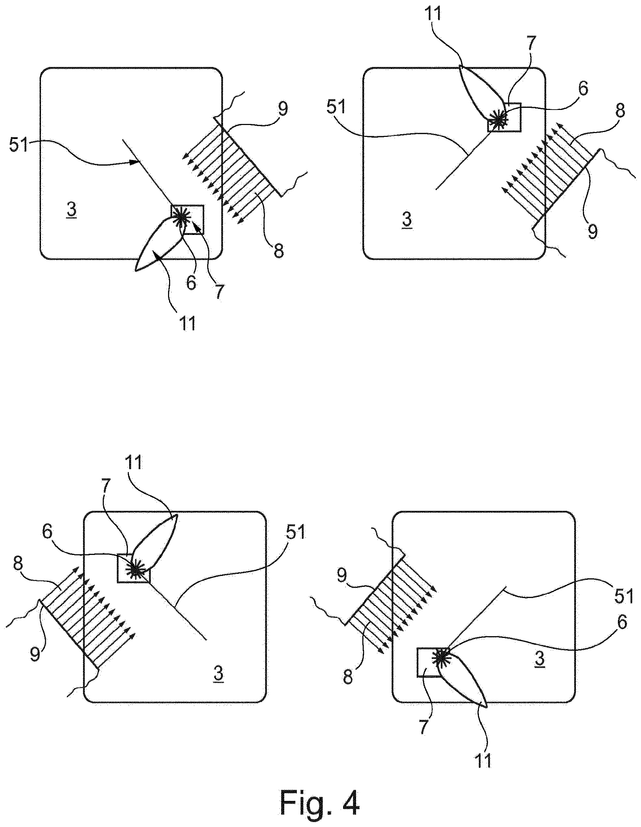

Figure 4 (not part of the invention) shows the metal powder bed 3 in a top view in the four different pictures. The processing location 6, or the solid component 7 to be built, are located in different locations of the building platform. Accordingly, the laser beam, or its projection 51 on the metal powder bed 3, respectively, have different orientations. A shielding gas flow is provided by shielding gas inflow nozzles 9. The position and orientation of the shielding gas inflow nozzles 9 is adapted to the laser beam direction. The shielding gas flow 8 may be directed along the laser beam projection 51 and towards the processing location 6. However, it might be desirable to place the processing location not too far from the shielding gas inflow nozzles 9. Thus, a trade-off is chosen, and the shielding gas inflow nozzles 9 are placed and oriented such that the shielding gas flow 8 is approximately perpendicular, i.e. includes a 90 degrees angle, with the laser beam projection 51. As is seen, this blows the plume 11 away from the laser beam, such that the laser beam will not or only negligibly be affected by the plume. It is appreciated that a processing trajectory will be primarily directed against the shielding gas flow direction.

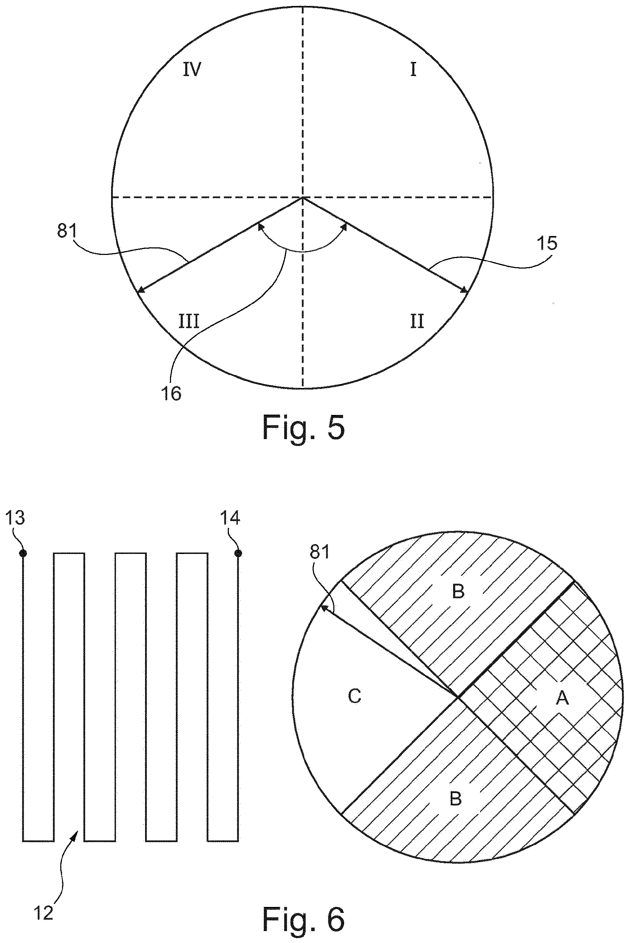

With reference to figure 5, a processing advance vector 15 , and a shielding gas flow vector 81 are shown, forming an angle 16 with each other. Angle 16 may be chosen to be as close as possible to 180 degrees, but also angles of 45 degrees or larger may be acceptable. For a processing cycle as depicted in figure 3 it might be beneficial to choose all advance vectors which appear during a processing cycle, or along a processing trajectory, to be located in a first quadrant I and a second quadrant II. The shielding gas flow vector 81 may be located in one of the third quadrant III and fourth quadrant IV, and in particular on the borderline between the third and the fourth quadrant.
Figure 6 finally depicts an exemplary processing trajectory 12 along which a processing location is advanced from a start point 13 to an end point 14, and angular ranges in which the shielding gas vector may be located while processing along said trajectory. Plainly spoken, all advance vectors are oriented from the top to the bottom and vice versa, and to the right. In such scanning processes the laser beam may be switched off, be attenuated, or be deviated or covered while moving from one "perpendicular" scanning line to a consecutive scanning line. On the right-hand side of figure 6, a circle is shown in which the shielding gas flow vector 81 is located. Area A depicts an angular range in which the shielding gas flow vector 81 is considered inadequate. Area B represents an angular range in which shielding gas flow vector 81 is found acceptable. Area C represents a preferred angular range for the orientation of the shielding gas flow vector 81 for all processing locations and advance vectors on processing trajectory 12. Dependent on the laser beam orientation and the achievable position of the shielding gas inflow nozzles, a trade-off may need to be chosen to select the specific orientation of the shielding gas flow vector 81. It is understood that the delimitations between areas A, B, and C are merely exemplary and may vary for specific cases, and will in fact rather be smooth transitions than hard boundaries. While the method according to the present disclosure has been described by virtue of exemplary embodiments, it is apparent that the methods defined in the appended claims are not restricted to these embodiments. In particular, while the details of the disclosure have been described in the context of a selective laser melting method, it is apparent for the person skilled in the art that the teaching of the present disclosure may be readily applied to other laser-based material processing methods, such as, but not limited to, laser welding. The exemplary embodiments are shown for the sake of a better understanding of the invention only and are in no way intended to limit the invention as claimed. Deviations and variations from the exemplary embodiments shown within the teaching of the present disclosure will be obvious to the skilled person.

### LIST OF REFERENCE NUMERALS

- 1: building platform
- 2: casing
- 3: metal powder
- 4: laser system
- 5: laser beam
- 6: processing location; laser beam incident point
- 7: solid component
- 8: shielding gas
- 9: shielding gas inflow nozzle
- 10: shielding gas outlet
- 11: plume; fume and/or vapor
- 12: processing trajectory
- 13: processing trajectory start point
- 14: processing trajectory end point
- 15: advance vector
- 16: angle
- 51: laser beam projection
- 81: shielding gas flow vector
- 121: scan lines
- 122: transition trajectory
- 123: implied beam movement
- 151: mean advance vector

- I: first quadrant
- II: second quadrant
- III: third quadrant
- IV: fourth quadrant

- A: inappropriate angular range
- B: acceptable angular range
- C: desirable angular range

## Claims

1. A method of material processing, the method comprising applying a laser beam (5), directing the laser beam to a processing location (6) to melt material (3) at the processing location, and providing a shielding gas flow (8), controlling the shielding gas flow dependent on at least one of a processing location position, a processing advance vector (15), and a processing trajectory (12), the method being **characterized by** further comprising the following steps :
advancing the processing location position along a processing trajectory (12), an advance vector (15) being related to each position along said trajectory; defining a two-dimensional Cartesian system centred on the starting point of the advance vector (15), and dividing the plane, in which the advance vector (15) is located, into four infinite quadrants, each quadrant being bounded by the two half-axes of the Cartesian system, wherein the numbering goes clockwise starting from the upper right quadrant (I); choosing the trajectory such that all advance vectors are located in a first and a second quadrant (I, II); controlling the shielding gas flow vector such that an angle(16) formed between an advance vector (15) and the shielding gas flow vector (81) is larger than or equal to 45 degrees; and further comprising controlling the shielding gas flow vector (81) such that an angle (16) formed between each advance vector (15) along a trajectory and the shielding gas flow vector (81) is larger than or equal to 45 degrees, and in particular the shielding gas flow vector (81) is located in one of a third and a fourth quadrant (III, IV).

2. The method according to claim 1, comprising advancing the processing location position along a processing trajectory (12), an advance vector (15) being related to each position along said trajectory, providing a shielding gas flow (8) having a shielding gas flow vector (81), the advance vector (15) and the shielding gas flow vector (81) forming an angle (16), **characterized in** comprising controlling the shielding gas flow vector such that the angle (16) is larger than or equal to 45 degrees.

3. The method according to any of claims 1 or 2, **characterized in** controlling the shielding gas flow vector (81) such that the angle (16) is larger than or equal to 60 degrees, in particular is larger than or equal to 90 degrees, and more particular is larger than or equal to 135 degrees.

4. The method according to any of the preceding claims, **characterized in that** controlling the shielding gas flow comprises determining all advance vectors (15) applied during a processing cycle, adjusting the shielding gas flow vector (81), and maintaining the shielding gas flow vector constant during the processing cycle.

5. The method according to any of the preceding claims, **characterized in** comprising providing at least one movable shielding gas inflow nozzle (9) and/or outlet nozzle, and controlling the shielding gas flow (8) in moving at least one of the shielding gas inflow nozzle and/or the shielding gas outlet nozzle, in particular in moving said at least one nozzle on an arcuate trajectory and more in particular moving said nozzle on a part-circular or circular trajectory.

6. The method according to any of the preceding claims, **characterized in** comprising providing at least one of a multitude of shielding gas inflow nozzles being oriented in various directions and/or a multitude of shielding gas outlet nozzles being oriented in various directions and controlling the shielding gas flow in selectively controlling a gas flow through nozzles being oriented in at least one selected direction.

7. The method of any of the preceding claims, comprising providing a movable shielding gas outlet (10), wherein controlling the shielding gas flow comprises adjusting a position and/or direction of the shielding gas outlet.

## Patentansprüche

1. Verfahren zur Werkstoffbearbeitung, das folgendes umfasst:
Anwenden eines Laserstrahls (5), Richten des Laserstrahls auf eine Bearbeitungsstelle (6), um an der Bearbeitungsstelle Werkstoff zu schmelzen (3), Bereitstellen eines Schutzgasstromes (8) und Regulieren des Schutzgasstromes in Abhängigkeit mindestens von einer Position der Bearbeitungsstelle, einem Bearbeitungsvorschubvektor (15) oder einem Bearbeitungsweg (12), wobei das Verfahren **dadurch gekennzeichnet ist, dass** es zudem folgende Schritte umfasst:
Vorwärtsbewegen der Position der Bearbeitungsstelle entlang eines Bearbeitungsweges (12), wobei ein Vorschubvektor (15) mit jeder Position entlang des Bearbeitungsweges in Beziehung steht;
Definieren eines zweidimensionalen kartesischen Systems, das im Ausgangspunkt des Vorschubvektors (15) zentriert ist, sowie Teilen der Ebene, in welcher sich der Vorschubvektor (15) befindet, in vier unendliche Quadranten, wobei jeder Quadrant von den zwei Halbachsen des kartesischen Systems begrenzt wird und die Nummerierung beginnend im oberen rechten Quadranten (I) im Uhrzeigersinn erfolgt;
Wählen des Bearbeitungsweges, so dass alle Vorschubvektoren in einem ersten und einem zweiten Quadranten (I, II) liegen;
Einstellen des Schutzgasstromvektors, so dass ein zwischen einem Vorschubvektor (15) und dem Schutzgasstromvektor (81) gebildeter Winkel (16) größer oder gleich 45 Grad ist; wobei das Verfahren zudem das Einstellen des Schutzgasstromvektors (81) umfasst, so dass ein zwischen jedem Vorschubvektor (15) entlang eines Bearbeitungsweges und dem Schutzgasstromvektor (81) gebildeter Winkel (16) größer oder gleich 45 Grad ist und insbesondere der Schutzgasstromvektor (81) im dritten oder im vierten Quadranten (III, IV) liegt.

2. Verfahren nach Anspruch 1, das folgendes umfasst: Vorwärtsbewegen der Position der Bearbeitungsstelle entlang eines Bearbeitungsweges (12), wobei ein Vorschubvektor (15) mit jeder Position entlang des Bearbeitungsweges in Beziehung steht, Bereitstellen eines Schutzgasstromes (8) mit einem Schutzgasstromvektor (81), wobei der Vorschubvektor und der Schutzgasstromvektor (81) einen Winkel (16) bilden, **dadurch gekennzeichnet, dass** der Schutzgasstromvektor so eingestellt wird, dass der Winkel (16) größer oder gleich 45 Grad ist.

3. Verfahren nach einem der Ansprüche 1 oder 2, **dadurch gekennzeichnet, dass** der Schutzgasstromvektor (81) so eingestellt wird, dass der Winkel (16) größer oder gleich 60 Grad, insbesondere größer oder gleich 90 Grad und weiter insbesondere größer oder gleich 135 Grad ist.

4. Verfahren nach einem der vorstehenden Ansprüche, **dadurch gekennzeichnet, dass** das Regulieren des Schutzgasstromes das Bestimmen aller während eines Bearbeitungszyklus angewandter Vorschubvektoren (15), das Einstellen des Schutzgasstromvektors (81) und das Konstanthalten des Schutzgasstromvektors während des Bearbeitungszyklus umfasst.

5. Verfahren nach einem der vorstehenden Ansprüche, **dadurch gekennzeichnet, dass** das Verfahren das Bereitstellen mindestens einer beweglichen Schutzgaseinströmdüse (9) und/oder -ausströmdüse umfasst, wobei der Schutzgasstrom (8) so reguliert wird, dass mindestens die Schutzgaseinströmdüse und/oder die Schutzgasausströmdüse bewegt wird, wobei insbesondere mindestens eine Düse auf einer bogenförmigen Bahn bewegt wird und weiter insbesondere die Düse auf einer teilkreisförmigen oder kreisförmigen Bahn bewegt wird.

6. Verfahren nach einem der vorstehenden Ansprüche, **dadurch gekennzeichnet, dass** das Verfahren das Bereitstellen mindestens einer Vielzahl von Schutzgaseinströmdüsen umfasst, die in verschiedene Richtungen ausgerichtet sind, und/oder einer Vielzahl von Schutzgasausströmdüsen, die in verschiedene Richtungen ausgerichtet sind, wobei der Schutzgasstrom reguliert wird, indem ein Gasstrom durch die Düsen selektiv so reguliert wird, das er mindestens in einer gewählten Richtung ausgerichtet ist.

7. Verfahren nach einem der vorstehenden Ansprüche, wobei das Verfahren das Bereitstellen eines beweglichen Schutzgasaustritts (10) umfasst, wobei das Regulieren des Schutzgasstromes das Einstellen einer Position und/oder Richtung des Schutzgasaustritts umfasst.

## Revendications

1. Procédé de traitement de matériaux, le procédé comprenant l'application d'un faisceau laser (5), l'orientation du faisceau laser vers un emplacement de traitement (6) pour faire fondre un matériau (3) à l'emplacement de traitement, et la fourniture d'un flux de gaz de protection (8), la commande du flux de gaz de protection en fonction au moins soit d'une position de l'emplacement de traitement, soit d'un vecteur d'avance de traitement (15), soit d'une trajectoire de traitement (12), le procédé étant **caractérisé en ce qu'**il comprend en outre les étapes suivantes :
l'avance de la position de l'emplacement de traitement le long d'une trajectoire de traitement (12), un vecteur d'avance (15) étant lié à chaque position le long de ladite trajectoire ; la définition d'un système cartésien bidimensionnel centré sur le point de départ du vecteur d'avance (15), et la division du plan dans lequel se trouve le vecteur d'avance (15) en quatre quadrants infinis, chaque quadrant étant limités par les deux demi-axes du système cartésien, la numérotation se faisant dans le sens horaire en partant du quadrant supérieur droit (I) ; le choix de la trajectoire de telle sorte que tous les vecteurs d'avance se trouvent dans un premier et un deuxième quadrant (I, II) ; la commande du vecteur de flux de gaz de protection de telle sorte qu'un angle (16) formé entre un vecteur d'avance (15) et le vecteur de flux de gaz de protection (81) soit supérieur ou égal à 45 degrés ;
et comprenant en outre la commande du vecteur de flux de gaz de protection (81) de telle sorte qu'un angle (16) formé entre chaque vecteur d'avance (15) le long d'une trajectoire et le vecteur de flux de gaz de protection (81) soit supérieur ou égal à 45 degrés, et en particulier que le vecteur de flux de gaz de protection (81) se trouve dans l'un d'un troisième et d'un quatrième quadrant (III, IV).

2. Procédé selon la revendication 1, comprenant l'avance de la position de l'emplacement de traitement le long d'une trajectoire de traitement (12), un vecteur d'avance (15) étant lié à chaque position le long de ladite trajectoire, la fourniture d'un flux de gaz de protection (8) ayant un vecteur de flux de gaz de protection (81), le vecteur d'avance (15) et le vecteur de flux de gaz de protection (81) formant un angle (16), **caractérisé en ce qu'**il comprend la commande du vecteur de flux de gaz de protection de telle sorte que l'angle (16) soit supérieur ou égal à 45 degrés.

3. Procédé selon l'une quelconque des revendications 1 ou 2, **caractérisé par** la commande du vecteur de flux de gaz de protection (81) de telle sorte que l'angle (16) soit supérieur ou égal à 60 degrés, en particulier qu'il soit supérieur ou égal à 90 degrés, et plus particulièrement qu'il soit supérieur ou égal à 135 degrés.

4. Procédé selon l'une quelconque des revendications précédentes, **caractérisé en ce que** la commande du flux de gaz de protection comprend la détermination de tous les vecteurs d'avance (15) appliqués au cours d'un cycle de traitement, le réglage du vecteur de flux de gaz de protection (81), et le maintien du vecteur de flux de gaz de protection constant au cours du cycle de traitement.

5. Procédé selon l'une quelconque des revendications précédentes, **caractérisé en ce qu'**il comprend la fourniture d'au moins une buse mobile d'injection de gaz de protection (9) et/ou une buse de sortie, et la commande du flux de gaz de protection (8) pour déplacer au moins l'une de la buse d'injection de gaz de protection et/ou de la buse de sortie de gaz de protection, en particulier pour déplacer ladite au moins une buse sur une trajectoire incurvée et plus particulièrement pour déplacer ladite buse selon une trajectoire circulaire ou partiellement circulaire.

6. Procédé selon l'une quelconque des revendications précédentes, **caractérisé en ce qu'**il comprend la fourniture d'au moins l'une d'une multitude de buses d'injection de gaz de protection orientées dans diverses directions et/ou d'une multitude de buse de sortie de gaz de protection orientées dans diverses directions et la commande du flux de gaz de protection pour commander sélectivement un flux de gaz à travers des buses orientées au moins selon une direction sélectionnée.

7. Procédé selon l'une quelconque des revendications précédentes, comprenant la fourniture d'une sortie mobile de gaz de protection (10), dans lequel la commande du flux de gaz de protection comprend le réglage d'une position et/ou d'une direction de la sortie de gaz de protection.
